# EUROPEAN PATENT SPECIFICATION

(11) **EP 4 435 318 B1**
(45) Date of publication and mention of the grant of the patent: **26.11.2025**
(21) Application number: 23164082.2
(22) Date of filing: 24.03.2023
(51) Int. Cl.: F21S 41/24, F21S 41/32, F21S 41/141, F21S 43/237, F21S 43/239, F21S 43/245, F21S 43/247, F21S 43/251, F21S 43/31, F21S 43/40

(54) **ILLUMINATION DEVICE FOR A VEHICLE**
BELEUCHTUNGSVORRICHTUNG FÜR EIN FAHRZEUG
DISPOSITIF D'ÉCLAIRAGE POUR UN VÉHICULE

(43) Date of publication of application: 25.09.2024
(73) Proprietor: ZKW Group GmbH, 3250 Wieselburg (AT)
(72) Inventor: Maier, Christian, 3281 Oberndorf an der Melk (AT); Zeuner, Markus, 3240 Mank (AT)
(74) Representative: Patentanwaltskanzlei Matschnig & Forsthuber OG

(56) References cited:
- EP-A1- 3 112 215
- WO-A1-2015/071620
- WO-A1-2021/005331
- CN-A- 113 175 651
- DE-A1- 102017 114 476
- JP-A- 2018 006 226
- JP-A- 2020 095 782

## Description

The invention relates to an illumination device for a vehicle headlamp, the illumination device comprising:
- at least one light guide comprising a light input section and a light output section, wherein the light input section is configured to input light of at least one light source into the light guide, wherein the light output section is configured to output light out of the light guide,
   and wherein the light output section of the at least one light guide follows a first extension line, wherein the light output section in a cross-section orthogonal to the first extension line substantially corresponds to a circle with a diameter,
- a light radiation body comprising an end region having a free surface, wherein the light coupling out of the light output section of the at least one light guide can be coupled into the light radiation body via the free surface, wherein the light radiation body further comprises a light radiation surface configured to radiate light coupled into the light radiation body via the free surface out of the light radiation body in front of the illumination device,
   wherein the free surface follows a second extension line substantially parallel to the first extension line, wherein the free surface in a cross-section orthogonal to the second extension line having a width,
- at least one light source for emitting light in the visible wavelength range, wherein the light from the at least one light source can be radiated in front of the illumination device via the light radiation body, wherein
the illumination device comprises a bundling device

Further, the invention relates to a vehicle headlamp comprising at least one illumination device according to the invention.

When emitting light via a light radiation body, light must be coupled into the light radiation body as efficiently as possible and distributed as evenly as possible, i.e. light must be coupled in homogeneously.

JP 2018 006226 A and WO 2015/071620 A1 show illumination devices of prior art.

It is an object of the invention to provide an enhanced illumination device.

To achieve this object the width of the free surface is smaller than the diameter of the light output section of the at least one light guide seen in cross-sections along the first and second extension lines, and the bundling device is configured to bundle and direct the light, which is coupled out from the light output section of the at least one light guide, onto the free surface of the light radiation body, so that light which is coupled out of the light output section of the at least one light guide and would not reach the free surface due to the smaller width of the free surface compared to the diameter of the light output section of the at least one light guide, is deflected onto the free surface, and the bundling device is formed as a shell which encloses the light output section of the at least one light guide on the side opposite the free surface and has end portions tapering towards the free surface.

Advantageously, the diameter of the cross sections of the at least one light guide along the first extension line is substantially constant.

Advantageously, the diameter of the at least one light guide is at least 4 mm. Advantageously, an inner surface of the bundling device is white or metallized for deflection of light.

Advantageously, the light guide input section of the at least one light guide comprises a light entry surface and a feed section, wherein the light entry surface and the subsequent feed section are configured to couple light of the at least one light source into the light guide and to the light output section of the light guide, wherein light fed into the light guide emerges via a light exit region of the light output section by means of coupling-out elements arranged on the light output section.

In particular, the feed section of light guides generally serves to mix the light in order to achieve homogeneous light decoupling from the beginning of the viewing area or the light exit surface of a light guide, whereby the light is not decoupled from the feed section and therefore generally has no decoupling elements.

Advantageously, the at least one light guide comprises a light guide end, which is formed as a cuboid, in particular a rectangular cuboid.

Advantageously, the illumination device comprises at least two light guides.

Advantageously, the at least two light guides are arranged in a way such that the light guide end of one light guide is arranged in the light path of the other light guide after the feed section, in order to enable a homogenous light distribution to the free surface of the light radiation body.

Advantageously, the bundling device comprises openings through which the at least one light guide is insertable into the bundling device.

Advantageously, the light radiation body further comprises a light deflection surface opposite to the light radiation surface, wherein the light deflection surface comprises a plurality of light deflection elements configured to deflect light emerging onto the light deflection surface to the light radiation surface.

Light from the light guide is deflected several times on the inner surface, so the light can be concentrated onto the free surface. Thus, the bundling device acts as a collimator.

The object of the invention is also achieved by a vehicle headlamp comprising at least one illumination device according to the invention.

### Brief description of the drawings

In the following, in order to further demonstrate the present invention, illustrative and non-restrictive embodiments are discussed, as shown in the drawings, which show:
- Fig. 1: a perspective view of an example of an illumination device according to the invention, wherein the illumination device comprises two light guides, a radiation body with a free surface, and a bundling device configured to deflect light of the light guides onto the free surface;
- Fig. 2: a front view of the two light guides of the illumination device of Fig. 1;
- Fig. 3: a cross-sectional view of the illumination device of Fig. 1 along the line A-A;
- Fig. 4: a perspective view of the arrangement of the two light guides to each other, where an end section of one light guide is in the light path of the other light guide in front of a feed section of this light guide; and
- Fig. 5: a back view of the illumination device of Fig. 1.

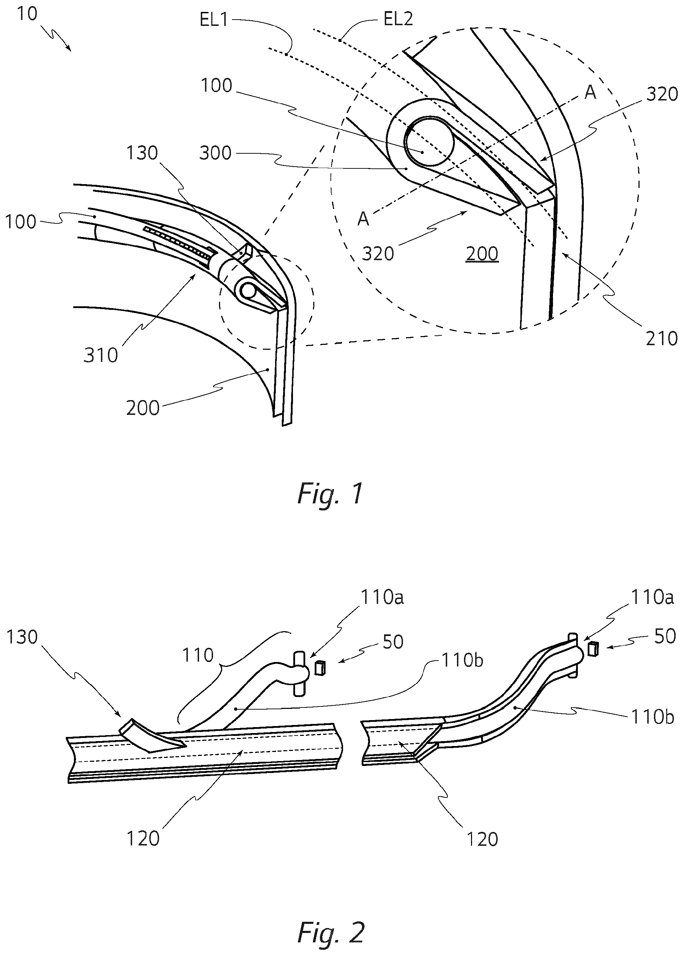

**Fig. 1** shows illumination device **10** for a vehicle headlamp, the illumination device in the shown example in the figures comprises two light guides **100** comprising a light input section **110** and a light output section **120,** wherein the light input section **110** is configured to input light of at least one light source **50** into the light guide **100,** wherein the light output section **120** is configured to output light out of the light guide **100.** The two light guides **100** are better shown in **Fig. 2****.**

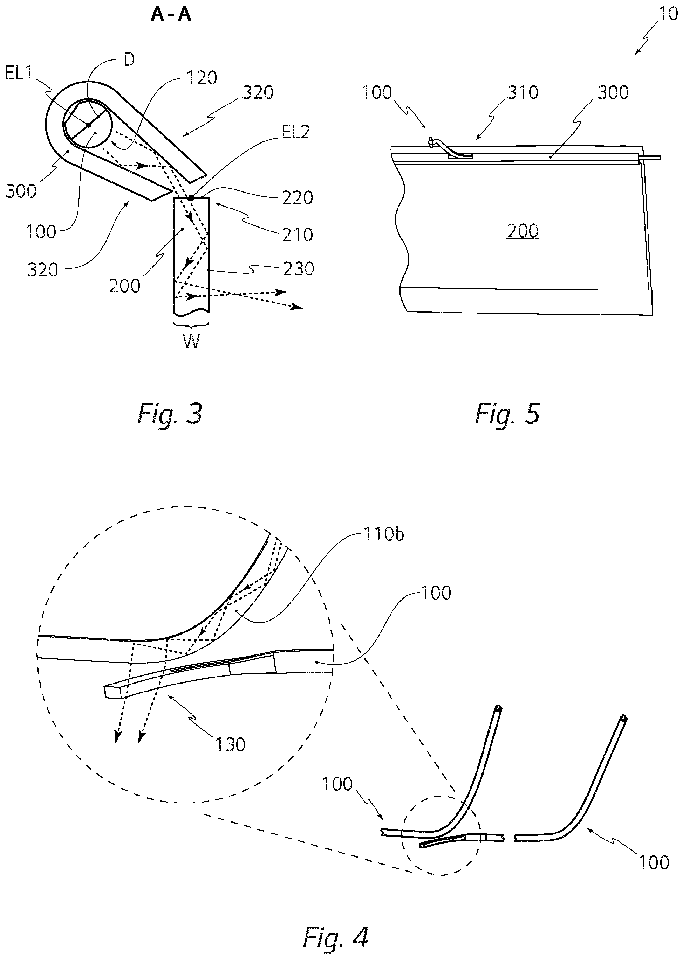

The light output section **120** of the two light guides **100** follows a first extension line **EL1,** which is shown in **Fig. 1** and **Fig. 3****,** wherein the light output section **120** in a cross-section orthogonal to the first extension line **EL1** substantially corresponds to a circle with a diameter **D,** which is depicted best in **Fig. 3** which shows a cross-sectional A-A view of **Fig. 1****.** The diameter **D** of the cross sections of the two light guides **100** along the first extension line **EL1** is substantially constant. In the shown example, the diameter **D** of the two light guides **100** is at least 4 mm.

As can be seen in **Fig. 2****,** the light guide input section **110** of the two light guides **100** comprises a light entry surface **110a** and a feed section **110b,** wherein the light entry surface **110a** and the subsequent feed section **110b** are configured to couple light of the at least one light source **50** into the light guides **100** and to the light output section **120** of the light guides **100,** wherein light fed into the light guide **100** emerges via a light exit region of the light output section **120** by means of coupling-out elements arranged on the light output section **120.**

Further, the illumination device **10** comprises a light radiation body **200** comprising an end region **210** having a free surface **220,** wherein the light coupling out of the light output section **120** of the two light guides **100** can be coupled into the light radiation body **200** via the free surface **220.**

The light radiation body **200** further comprises a light radiation surface **230** configured to radiate light coupled into the light radiation body **200** via the free surface **220** out of the light radiation body **200** in front of the illumination device **10.**

The free surface **220** follows a second extension line **EL2** substantially parallel to the first extension line **EL1,** wherein the free surface **220** in a cross-section orthogonal to the second extension line **EL2** having a width **W,** wherein the width **W** of the free surface **220** is smaller than the diameter **D** of the light output section **120** of the at least one light guide **100** seen in cross-sections along the first and second extension lines **EL1, EL2.**

The at least one light source **50** for each light guide **100** is configured to emit light in the visible wavelength range, wherein the light from the at least one light source **50** can be radiated in front of the illumination device **10** via the light radiation body **200.**

The light radiation body **200** further comprises a light deflection surface opposite to the light radiation surface **230,** wherein the light deflection surface comprises a plurality of light deflection elements (not shown in the figures) configured to deflect light emerging onto the light deflection surface to the light radiation surface **230.**

The illumination device **10** further comprises a bundling device **300** configured to bundle and direct the light, which is coupled out from the light output section **120** of the two light guides **100,** onto the free surface **220** of the light radiation body **200,** so that light which is coupled out of the light output section **120** of the two light guides **100** and would not reach the free surface **220** due to the smaller width **W** of the free surface **220** compared to the diameter **D** of the light output section **120** of the at least one light guide **100,** is deflected onto the free surface **220.**

As can be seen for example in **Fig. 1** and **Fig. 2****,** the bundling device **300** is formed as a shell which encloses the light output section **120** of the at least one light guide **100** on the side opposite the free surface **220** and has end portions **320** tapering towards the free surface **220.**

Further, the bundling device **300** comprises openings **310** (seen in **Fig. 1**) through which the light guides **100** are insertable into the bundling device **300.**

In the shown example in the figures, an inner surface of the bundling device **300** is metallized for deflection of light.

As can be seen in **Fig. 4****,** one light guide **100** comprises a light guide end **130,** which is formed as a cuboid, in particular a rectangular cuboid.

The at least two light guides **100** are arranged in a way such that the light guide end **130** of the one light guide **100** is arranged in the light path of the other light guide **100** after the feed section **110b,** in order to enable a homogenous light distribution to the free surface **220** of the light radiation body **200.**

Further, **Fig. 5** shows a back view of the exemplary illumination device **10.**

### LIST OF REFERENCE SIGNS

| | |
|---|---|
| Illumination device | 10 |
| Light source | 50 |
| Light guide | 100 |
| Light input section | 110 |
| Light entry surface | 110a |
| Feed section | 110b |
| Light output section | 120 |
| Light guide end | 130 |
| Light radiation body | 200 |
| End region | 210 |
| Free surface | 220 |
| Light radiation surface | 230 |
| Bundling device | 300 |
| Opening | 310 |
| End portions | 320 |
| First extension line | EL1 |
| Second extension line | EL2 |
| Diameter | D |
| Width | W |

## Claims

1. Illumination device (10) for a vehicle headlamp, the illumination device comprising:
- at least one light guide (100) comprising a light input section (110) and a light output section (120), wherein the light input section (110) is configured to input light of at least one light source (50) into the light guide (100), wherein the light output section (120) is configured to output light out of the light guide (100),
and wherein the light output section (120) of the at least one light guide (100) follows a first extension line (EL1), wherein the light output section (120) in a cross-section orthogonal to the first extension line (EL1) substantially corresponds to a circle with a diameter (D),
- a light radiation body (200) comprising an end region (210) having a free surface (220), wherein the light coupling out of the light output section (120) of the at least one light guide (100) can be coupled into the light radiation body (200) via the free surface (220), wherein the light radiation body (200) further comprises a light radiation surface (230) configured to radiate light coupled into the light radiation body (200) via the free surface (220) out of the light radiation body (200) in front of the illumination device (10),
wherein the free surface (220) follows a second extension line (EL2) substantially parallel to the first extension line (EL1), wherein the free surface (220) in a cross-section orthogonal to the second extension line (EL2) having a width (W),
- at least one light source (50) for emitting light in the visible wavelength range, wherein the light from the at least one light source (50) can be radiated in front of the illumination device (10) via the light radiation body (200), wherein
the illumination device (10) comprises a bundling device (300), **characterized in that** the width (W) of the free surface (220) is smaller than the diameter (D) of the light output section (120) of the at least one light guide (100) seen in cross-sections along the first and second extension lines (EL1, EL2), and **in that**
the bundling device (300) is configured to bundle and direct the light, which is coupled out from the light output section (120) of the at least one light guide (100), onto the free surface (220) of the light radiation body (200), so that light which is coupled out of the light output section (120) of the at least one light guide (100) and would not reach the free surface (220) due to the smaller width (W) of the free surface (220) compared to the diameter (D) of the light output section (120) of the at least one light guide (100), is deflected onto the free surface (220),
and **in that** the bundling device (300) is formed as a shell which encloses the light output section (120) of the at least one light guide (100) on the side opposite the free surface (220) and has end portions (320) tapering towards the free surface (220).

2. Illumination device according to claim 1, **wherein** the diameter (D) of the cross sections of the at least one light guide (100) along the first extension line (EL1) is substantially constant.

3. Illumination device according to claim 1 or 2, **wherein** the diameter (D) of the at least one light guide (100) is at least 4 mm.

4. Illumination device according to any one of the preceding claims, **wherein** an inner surface of the bundling device (300) is white or metallized for deflection of light.

5. Illumination device according to any of claims 1 to 4, **wherein** the light guide input section (110) of the at least one light guide (100) comprises a light entry surface (110a) and a feed section (110b), wherein the light entry surface (110a) and the subsequent feed section (110b) are configured to couple light of the at least one light source (50) into the light guide (100) and to the light output section (120) of the light guide (100), wherein light fed into the light guide (100) emerges via a light exit region of the light output section (120) by means of coupling-out elements arranged on the light output section (120).

6. Illumination device according to any of claims 1 to 5, **wherein** the at least one light guide (100) comprises a light guide end (130), which is formed as a cuboid, in particular a rectangular cuboid.

7. Illumination device according to any one of claims 1 to 6, **wherein** the illumination device (10) comprises at least two light guides (100).

8. Illumination device according to claim 7, **wherein** the at least two light guides (100) are arranged in a way such that the light guide end (130) of one light guide (100) is arranged in the light path of the other light guide (100) after the feed section (110b), in order to enable a homogenous light distribution to the free surface (220) of the light radiation body (200).

9. Illumination device according to any one of claims 1 to 8, **wherein** the bundling device (300) comprises openings (310) through which the at least one light guide (100) is insertable into the bundling device (300).

10. Illumination device according to any one of claims 1 to 9, **wherein** the light radiation body (200) further comprises a light deflection surface opposite to the light radiation surface (230), wherein the light deflection surface comprises a plurality of light deflection elements configured to deflect light emerging onto the light deflection surface to the light radiation surface (230).

11. Vehicle headlamp comprising at least one illumination device (10) according to any of claims 1 to 10.

## Patentansprüche

1. Beleuchtungsvorrichtung (10) für einen Fahrzeugscheinwerfer, wobei die Beleuchtungsvorrichtung umfasst:
- mindestens einen Lichtleiter (100) mit einem Lichteingangsabschnitt (110) und einem Lichtaustrittsabschnitt (120), wobei der Lichteingangsabschnitt (110) so konfiguriert ist, dass er Licht von mindestens einer Lichtquelle (50) in den Lichtleiter (100) einspeist, wobei der Lichtaustrittsabschnitt (120) so konfiguriert ist, dass er Licht aus dem Lichtleiter (100) ausgibt,
und wobei der Lichtaustrittsabschnitt (120) des mindestens einen Lichtleiters (100) einer ersten Erstreckungslinie (EL1) folgt, wobei der Lichtaustrittsabschnitt (120) in einem Querschnitt orthogonal zur ersten Erstreckungslinie (EL1) im Wesentlichen einem Kreis mit einem Durchmesser (D) entspricht,
- einen Lichtstrahlungskörper (200) mit einem Endbereich (210) mit einer freien Oberfläche (220), wobei das aus dem Lichtaustrittsabschnitt (120) des mindestens einen Lichtleiters (100) ausgekoppelte Licht über die freie Oberfläche (220) in den Lichtstrahlungskörper (200) eingekoppelt werden kann, wobei der Lichtstrahlungskörper (200) ferner eine Lichtstrahlungsfläche (230) umfasst, die so konfiguriert ist, dass sie Licht, das über die freie Oberfläche (220) in den Lichtstrahlungskörper (200) gekoppelt wurde, aus dem Lichtstrahlungskörper (200) vor der Beleuchtungseinrichtung (10) ausstrahlen kann,
wobei die freie Oberfläche (220) einer zweiten Erstreckungslinie (EL2) folgt, die im Wesentlichen parallel zur ersten Erstreckungslinie (EL1) verläuft, wobei die freie Oberfläche (220) in einem Querschnitt orthogonal zur zweiten Erstreckungslinie (EL2) eine Breite (W) aufweist,
- mindestens eine Lichtquelle (50) zum Emittieren von Licht im sichtbaren Wellenlängenbereich, wobei das Licht von der mindestens einen Lichtquelle (50) über den Lichtstrahlkörper (200) vor der Beleuchtungseinrichtung (10) abgestrahlt werden kann, wobei
die Beleuchtungseinrichtung (10) eine Bündelungseinrichtung (300) umfasst, **dadurch gekennzeichnet, dass** die Breite (W) der freien Fläche (220) kleiner ist als der Durchmesser (D) des Lichtaustrittsabschnitts (120) des mindestens einen Lichtleiters (100), gesehen in Querschnitten entlang der ersten und zweiten Erstreckungslinie (EL1, EL2), und dass die Bündelungseinrichtung (300) dazu ausgelegt ist, das aus dem Lichtaustrittsabschnitt (120) des mindestens einen Lichtleiters (100) ausgekoppelte Licht zu bündeln und auf die freie Oberfläche (220) des Lichtstrahlkörpers (200) zu lenken, so dass Licht, das aus dem Lichtaustrittsabschnitt (120) des mindestens einen Lichtleiters (100) ausgekoppelt wird und aufgrund der im Vergleich zum Durchmesser (D) des Lichtaustrittsabschnitts (120) des mindestens einen Lichtleiters (100) geringeren Breite (W) der freien Oberfläche (220) die freie Oberfläche (220) nicht erreichen würde, auf die freie Oberfläche (220) abgelenkt wird,
und dass
die Bündelungseinrichtung (300) als eine Hülle ausgebildet ist, die den Lichtaustrittsabschnitt (120) des mindestens einen Lichtleiters (100) auf der der freien Oberfläche (220) gegenüberliegenden Seite umschließt und sich zur freien Oberfläche (220) hin verjüngende Endabschnitte (320) aufweist.

2. Beleuchtungsvorrichtung nach Anspruch 1, wobei der Durchmesser (D) der Querschnitte des mindestens einen Lichtleiters (100) entlang der ersten Erstreckungslinie (EL1) im Wesentlichen konstant ist.

3. Beleuchtungsvorrichtung nach Anspruch 1 oder 2, wobei der Durchmesser (D) des mindestens einen Lichtleiters (100) mindestens 4 mm beträgt.

4. Beleuchtungsvorrichtung nach einem der vorstehenden Ansprüche, wobei eine Innenfläche der Bündelungseinrichtung (300) weiß oder metallisiert ist, um Licht abzulenken.

5. Beleuchtungsvorrichtung nach einem der Ansprüche 1 bis 4, wobei der Lichtleiter-Eingangsabschnitt (110) des mindestens einen Lichtleiters (100) eine Lichteintrittsfläche (110a) und einen Zuführungsabschnitt (110b) umfasst, wobei die Lichteintrittsfläche (110a) und der anschließende Zuführungsabschnitt (110b) so konfiguriert sind, dass sie Licht der mindestens einen Lichtquelle (50) in den Lichtleiter (100) und zum Lichtaustrittsabschnitt (120) des Lichtleiters (100) koppeln, wobei in den Lichtleiter (100) eingekoppeltes Licht über einen Lichtaustrittsbereich des Lichtaustrittsabschnitts (120) mittels am Lichtaustrittsabschnitt (120) angeordneter Auskoppelelemente austritt.

6. Beleuchtungsvorrichtung nach einem der Ansprüche 1 bis 5, wobei der mindestens eine Lichtleiter (100) ein Lichtleiterende (130) umfasst, das als Quader, insbesondere als rechteckiger Quader, ausgebildet ist.

7. Beleuchtungsvorrichtung nach einem der Ansprüche 1 bis 6, wobei die Beleuchtungsvorrichtung (10) mindestens zwei Lichtleiter (100) umfasst.

8. Beleuchtungsvorrichtung nach Anspruch 7, wobei die mindestens zwei Lichtleiter (100) so angeordnet sind, dass das Lichtleiterende (130) eines Lichtleiters (100) im Lichtweg des anderen Lichtleiters (100) nach dem Zuführungsabschnitt (110b) angeordnet ist, um eine homogene Lichtverteilung auf die freie Oberfläche (220) des Lichtstrahlkörpers (200) zu ermöglichen.

9. Beleuchtungsvorrichtung nach einem der Ansprüche 1 bis 8, wobei die Bündelungseinrichtung (300) Öffnungen (310) umfasst, durch die der mindestens eine Lichtleiter (100) in die Bündelungseinrichtung (300) einführbar ist.

10. Beleuchtungsvorrichtung nach einem der Ansprüche 1 bis 9, wobei der Lichtstrahlkörper (200) ferner eine der Lichtstrahlfläche (230) gegenüberliegende Lichtablenkfläche umfasst, wobei die Lichtablenkfläche eine Vielzahl von Lichtablenkelementen umfasst, die so konfiguriert sind, dass sie auf die Lichtablenkfläche auftreffendes Licht zur Lichtstrahlfläche (230) ablenken.

11. Fahrzeugscheinwerfer mit mindestens einer Beleuchtungseinrichtung (10) gemäß einem der Ansprüche 1 bis 10.

## Revendications

1. Dispositif d'éclairage (10) pour un phare de véhicule, le dispositif d'éclairage comprenant :
- au moins un guide de lumière (100) comprenant une section d'entrée de lumière (110) et une section de sortie de lumière (120), dans lequel la section d'entrée de lumière (110) est configurée pour entrer la lumière d'au moins une source lumineuse (50) dans le guide de lumière (100), dans lequel la section de sortie de lumière (120) est configurée pour sortir la lumière du guide de lumière (100),
et dans lequel la section de sortie de lumière (120) du au moins un guide de lumière (100) suit une première ligne d'extension (EL1), dans lequel la section de sortie de lumière (120) dans une section transversale orthogonale à la première ligne d'extension (EL1) correspond sensiblement à un cercle d'un diamètre (D),
- un corps de rayonnement lumineux (200) comprenant une région d'extrémité (210) ayant une surface libre (220), dans lequel la lumière sortant de la section de sortie de lumière (120) d'au moins un guide de lumière (100) peut être couplée dans le corps de rayonnement lumineux (200) via la surface libre (220), dans lequel le corps de rayonnement lumineux (200) comprend en outre une surface de rayonnement lumineux (230) configurée pour rayonner la lumière couplée dans le corps de rayonnement lumineux (200) via la surface libre (220) hors du corps de rayonnement lumineux (200) devant le dispositif d'éclairage (10),
dans lequel la surface libre (220) suit une deuxième ligne d'extension (EL2) sensiblement parallèle à la première ligne d'extension (EL1), dans lequel la surface libre (220) dans une section transversale orthogonale à la deuxième ligne d'extension (EL2) a une largeur (W),
- au moins une source lumineuse (50) pour émettre de la lumière dans la gamme de longueurs d'onde visible, dans laquelle la lumière provenant de la au moins une source lumineuse (50) peut être rayonnée devant le dispositif d'éclairage (10) via le corps de rayonnement lumineux (200), dans lequel
le dispositif d'éclairage (10) comprend un dispositif de regroupement (300), **caractérisé en ce que** la largeur (W) de la surface libre (220) est inférieure au diamètre (D) de la section de sortie de lumière (120) du au moins un guide de lumière (100) vu en coupe transversale le long des première et deuxième lignes d'extension (EL1, EL2), et **en ce que** le dispositif de regroupement (300) est configuré pour regrouper et diriger la lumière, qui est couplée à partir de la section de sortie de lumière (120) du au moins un guide de lumière (100), sur la surface libre (220) du corps de rayonnement lumineux (200), de sorte que la lumière qui est couplée à partir de la section de sortie de lumière (120) du au moins un guide de lumière (100) et qui n'atteindrait pas la surface libre (220) en raison de la largeur (W) plus petite de la surface libre (220) par rapport au diamètre (D) de la section de sortie de lumière (120) du au moins un guide de lumière (100), est déviée sur la surface libre (220),
et **en ce que**
le dispositif de regroupement (300) est formé comme une coque qui entoure la section de sortie de lumière (120) du au moins un guide de lumière (100) du côté opposé à la surface libre (220) et comporte des parties d'extrémité (320) qui se rétrécissent vers la surface libre (220).

2. Dispositif d'éclairage selon la revendication 1, dans lequel le diamètre (D) des sections transversales d'au moins un guide de lumière (100) le long de la première ligne d'extension (EL1) est sensiblement constant.

3. Dispositif d'éclairage selon la revendication 1 ou 2, dans lequel le diamètre (D) d'au moins un guide de lumière (100) est d'au moins 4 mm.

4. Dispositif d'éclairage selon l'une quelconque des revendications précédentes, dans lequel une surface intérieure du dispositif de regroupement (300) est blanche ou métallisée pour dévier la lumière.

5. Dispositif d'éclairage selon l'une quelconque des revendications 1 à 4, dans lequel la section d'entrée du guide de lumière (110) du au moins un guide de lumière (100) comprend une surface d'entrée de lumière (110a) et une section d'alimentation (110b), dans lequel la surface d'entrée de lumière (110a) et la section d'alimentation (110b) qui suit sont configurées pour coupler la lumière de la au moins une source de lumière (50) dans le guide de lumière (100) et à la section de sortie de lumière (120) du guide de lumière (100), dans lequel la lumière introduite dans le guide de lumière (100) émerge via une région de sortie de lumière de la section de sortie de lumière (120) au moyen d'éléments de découplage disposés sur la section de sortie de lumière (120).

6. Dispositif d'éclairage selon l'une quelconque des revendications 1 à 5, dans lequel le au moins un guide de lumière (100) comprend une extrémité de guide de lumière (130) qui est formée comme un parallélépipède, en particulier un parallélépipède rectangle.

7. Dispositif d'éclairage selon l'une quelconque des revendications 1 à 6, dans lequel le dispositif d'éclairage (10) comprend au moins deux guides de lumière (100).

8. Dispositif d'éclairage selon la revendication 7, dans lequel les au moins deux guides de lumière (100) sont disposés de telle manière que l'extrémité (130) d'un guide de lumière (100) soit disposée dans le trajet lumineux de l'autre guide de lumière (100) après la section d'alimentation (110b), afin de permettre une distribution homogène de la lumière vers la surface libre (220) du corps de rayonnement lumineux (200).

9. Dispositif d'éclairage selon l'une quelconque des revendications 1 à 8, dans lequel le dispositif de regroupement (300) comprend des ouvertures (310) à travers lesquelles le au moins un guide de lumière (100) peut être inséré dans le dispositif de regroupement (300).

10. Dispositif d'éclairage selon l'une quelconque des revendications 1 à 9, dans lequel le corps de rayonnement lumineux (200) comprend en outre une surface de déviation de la lumière opposée à la surface de rayonnement lumineux (230), dans lequel la surface de déviation de la lumière comprend une pluralité d'éléments de déviation de la lumière configurés pour dévier la lumière émergeant sur la surface de déviation de la lumière vers la surface de rayonnement lumineux (230).

11. Projecteur de véhicule comprenant au moins un dispositif d'éclairage (10) selon l'une quelconque des revendications 1 à 10.
